# EUROPEAN PATENT SPECIFICATION

(11) **EP 1 997 174 B1**
(45) Date of publication and mention of the grant of the patent: **05.11.2014**
(21) Application number: 07710591.4
(22) Date of filing: 15.03.2007
(51) Int. Cl.: H01M 4/88, H01M 4/86, H01M 8/12

(54) **PROCESS FOR OBTAINING AQUEOUS SUSPENSIONS FOR ELECTRODES OF SOLID OXIDE FUEL CELLS AND OTHER ELECTROCATALYTIC DEVICES**
PROZESS ZUM ERHALTEN VON WÄSSRIGEN SUSPENSIONEN FÜR ELEKTRODEN VON FESTOXIDBRENNSTOFFZELLEN UND ANDEREN ELEKTROKATALYTISCHEN ANORDNUNGEN
PROCÉDÉ D'OBTENTION DE SUSPENSIONS AQUEUSES POUR ÉLECTRODES DE PILES À COMBUSTIBLE À OXYDE SOLIDE ET AUTRES DISPOSITIFS ÉLECTROCATALYTIQUES

(30) Priority: 17.03.2006 BR PI0601210
(43) Date of publication of application: 03.12.2008
(73) Proprietor: Coppe/Ufrj - Coordenacao dos Programas de pos- Gradacao de engenharia da Universidade do Rio de Janeiro, 21945-970 Ilha do Fundao RJ (BR)
(72) Inventor: DE MIRANDA, Paulo, Emilio Valadâo, Zip Code 27793-000 (BR); VILLALOBOS, Pedro, Ricchini, Zip Code 22241-090 (BR)
(74) Representative: Johansson, Lars E.
(86) International application number: PCT/BR2007/000063
(87) International publication number: WO 2007/106963

(56) References cited:
- WO-A1-94/20998
- WO-A2-2005/124916
- DE-A1- 10 338 929
- JP-A- 08 045 512
- US-A- 6 017 647
- US-A1- 2003 027 033
- DELL'AGLI G ET AL: "Films by slurry coating of nanometric YSZ (8mol% Y2O3) powders synthesized by low-temperature hydrothermal treatment", JOURNAL OF THE EUROPEAN CERAMIC SOCIETY, ELSEVIER SCIENCE PUBLISHERS, BARKING, ESSEX, GB, vol. 25, no. 12, 1 January 2005 (2005-01-01), pages 2017-2021, XP004934206, ISSN: 0955-2219, DOI: 10.1016/J.JEURCERAMSOC.2005.03.006

## Description

### TECHNICAL FIELD

The present invention describes a process for obtaining aqueous suspensions for the manufacture of porous electrodes for solid oxide fuels cells and other electrocatalytic devices using as principle the generation of core-shell type (nano) composites of hydrophilic polymers and oxide particles processed mechanically (high energy milling), and subsequent hydration of the hydrophilic layer originating stable suspensions with high content of solids.

### TECHNICAL BACKGROUND

The area of solid oxides fuels cells and other electrocatalytic devices presents a variety of suspensions formulations to create films with electrocatalytic activity (electrodes). Such suspensions are applied using several methods, subsequently dried with the formation of a precursor film and, at the final processing step, calcinated (thermally treated) to the organic components and partial linking (sintering) of the particles in a porous film pattern of the electrocatalytic element of interest.

These suspensions are constituted by an organic solvent (usually taxol or terpineol) and addition of compatible polymers (hydrophobic due to the solvent nature) with coadjuvant functions to increase the integrity of the formed precursor film.

In this usual processing, there is the need of using exhausting equipments aiming to the solvent remotion from the environment and are observed the associated risks due to the handling of the organic solvents, such as the risk of explosions and chronic exposition of the operator to the toxicity of the volatiles used.

A search for patent documentation on the subject matter has not indicated the existence of relevant or conflicting documents. However, it is necessary to cite two articles of the open literature that are important to the field analysis in the following.

Pramanik et al. (Jagadish C. Ray, Ranjan K. Pati, P. Parmanik, Journal of the European Ceramic Society 20 (2000), p. 1289-1295) discuss the formation of zirconia nanoparticles stabilized with yttria from the drying of PVA (polyvinyl alcohol), saccharose, and zirconia/yttria nitrate, followed by thermal decomposition of the mass at a temperature of 200 degrees centigrade, milling and calcination. Clear differences of this article in relation to the present patent application are related to the facts that, primarily, the work of Pramanik et al. has as objective to obtain isolated nanoparticles via a wet route (gel), and presents the difficulty of processing (milling) of the resulting mass of the gel decomposition, including with the potential of violent combustion or even explosion, due to the polymer reaction with the nitrate ions under heating in a step previous to the milling operation.

C. Pagliuca et al. (G. Dell'Agli, S. Esposito, G. Mascolo, M.C. Mascolo, C. Pagliuca, Journal of the European Ceramic Society 25 (2005), p. 2017-2021), present the use of PVA/PEG (polyethyleneglycol) to the formation of aqueous suspensions of oxides. However, this processing is already performed with the polymer in aqueous medium, being the suspension viscous form. Such processing format differs substantially from the route herein claimed and does not lead to the advantages described in a two stages processing.

### SUMMARY OF THE INVENTION

The present patent describes preferential methods and materials for obtaining core-shell type(nano) composites of hydrophilic polymers and their application to obtain suspensions with high content of solids which generate electrodes for solid state electrocatalytic devices (such as solid oxide fuel cells, oxide membrane reactors and others electrocatalytic devices) and/or surface modified electrodes through the insertion of metallic ions in the hydration water of these (nano) composites in a previous step to the ceramic processing (calcination and sintering).

### DETAILED DESCRIPTION OF THE INVENTION

The invention herein described take into consideration the difference of hardness of two or more constituents of a mixture for electrodes processing, on the one hand constituted with inorganic solids such as yttria stabilized zirconia, cerium oxide, gadolinium doped cerium oxide with, nickel oxide, copper oxide among others with properties of interest to the functioning of the device, catalysts and/or solid electrodes, and on the other hand with organic additions, preferentially polyethyleneglycol and/or polyvinyl alcohol and/or saccharose, among others.

The process consists to submit the organic components above described to dry milling in a planetary ball mill (relation between the mass of material to be processed and mass of the grinding balls ranging from 1:2 to 1:8, preferentially 1:3 to 1:6, typical occupation between 40 to 80% of the milling vessel volume) in consecutive millings, typically between 2 to 12 cycles, preferentially between 6 to 10 cycles, up to 10 minutes each, with rotation between 100 to 300 rpm, aiming to obtain a material finely divided and homogeneous. This first step has as objective diminishing the size of the organic phase particle and homogenizing it, and therefore, it is applied only to the case of multiples organic components or in the case of organic components of very high granulometry compared to that of the inorganic components. For cases where there is granulometry similarity between the organic and inorganic phases, one can go on directly to the step described in the following.

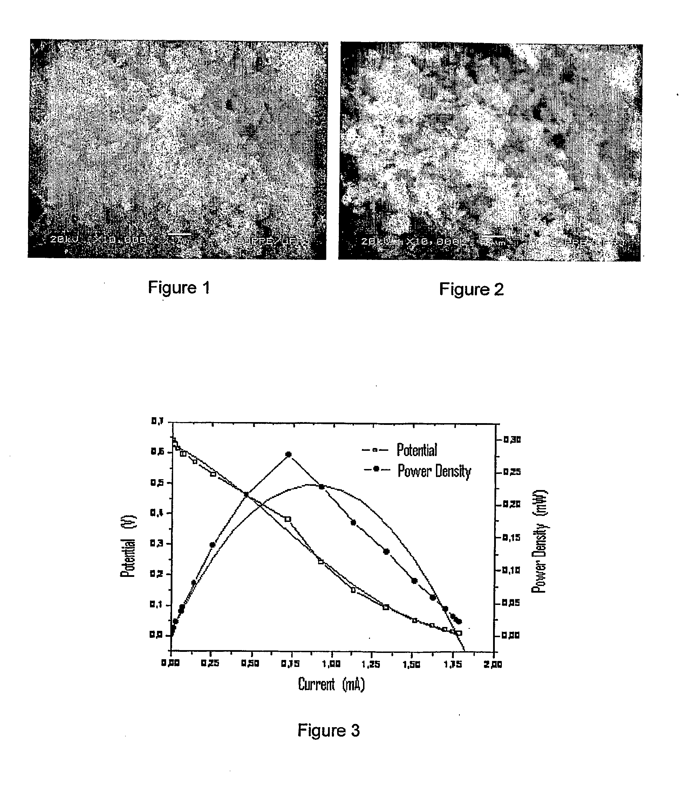

The resulting material of the above procedure is submitted to a new processing in a planetary ball mill with the inorganic components of the mixture, in the same condition ranges described above, but with an amount of 0.01 to 15%, preferentially between 0.01 to 5%, more preferentially between 0.01 to 2% by mass of the organic fraction with respect to the active inorganic component. The resulting mass is constituted of the (nano) composite illustrated in Figures 1 and 2.

The resulting mass is processed in a suspension by the addition of water and mechanical homogenization in an adequate amount to the desired viscosity according to the subsequent deposition process, which is not object of this patent.

In an alternative manner, it is possible the insertion of inorganic ions, preferentially nitrates, of chemical elements of which there is the interest in the formation of a surface layer of copper oxide on the one originally added in the miling step. In this case, the inorganic ions, preferentially zirconia, yttrium, cerium, gadolinium, nickel and copper nitrates, among others, are added in the hydration water, originating the modified suspension resulting from the mechanical homogenization. The desired viscosity of the suspension is a function of the amount of aqueous solution or added water and, as in the previous example, it depends on the subsequent deposition procedure, which is not object of this patent.

The ions insertion in the hydration solution can lead to the generation of auxiliary structures of sintering, to the formation of new surface oxide layer capable of modifying the electrocatalytic properties of the film at the end of the process (when compared to the film obtained in the processing without the salts), among others process that can result in the improvement of the desired properties.

The utilization of two processing steps, the first one consisting of dry milling and the second one with solvent addition (water), also leads to a storage advantage in which the precursor mixture of the suspension can be maintained for long time periods (estimated in time of years).

The processing of mixtures of the above described nature in high energy equipments - such as the planetary ball mill, in the conditions described and detailed in the following example, leads to the formation of a polymeric layer that covers the individual particles of the inorganic components - Figures 1 and 2, which in a subsequent hydration leads to the formation of pastes with high content of dispersed solids.

An additional function of this layer is the stabilization of the as formed surfaces that result from breaking the inorganic particles by milling, when these particles are with size in the range of microns or greater sizes, stabilizing the particles possess a size usually of interest to the application, sub-micrometric size and/or contributing to the formation of a fraction of particles of small size which can improve the sintering properties. In other words, this processing can also start from powders with particle size relatively big, cheaper than powders possessing particles in a sub-micrometric scale.

This polymeric layer avoids the particle agglomeration, and the generated structure is kept stable for long periods of time (comparable with the stability of the dry polymer), resulting in a product with long shelf life. In other words, it constitutes a precursor mixture to the generation of the suspension, without the problems of colloid stability.

Figures 1 and 2 show the formation of these (nano) composites through the comparison between the images of secondary electrons (real topography - Figure 1) and retro-scattered (inorganic fraction of high molecular mass - Figure 2).

Upon effectively being used, this material is added to the appropriated polar solvent, preferentially water, which results in hydration and partial solubilization of the surface polymeric layer and consequent formation of a suspension with high content of solids. These are sterically stabilized by the polymeric chains adjacent to the inorganic particles surfaces and by the high viscosity of the medium itself. Such suspensions are then deposited on the substrates and receive the thermal treatments adequate to procduce electrodes for solid oxides fuel cells, for oxide membrane reactors and for other electrocatalytic devices.

### EXAMPLES

Obtaining modified electrodes with the addition of precursors of yttria stabilized zirconia with the objective of improving its micro-structure.

Polyvinyl alcohol (PVA) and saccharose (in a proportion ranging from 0 to 15% by weight) are previously milled/homogenized in a planetary ball mill (relation between the mass of material to be processed and the mass of the milling balls ranging from 1:2 to 1:8, typical occupation from 40 to 80% of the milling vessel volume) in consecutives millings, typically 9 cycles of 10 minutes each, with rotation between 100 and 300 rpm.

The resulting material of the above procedure is milled once again, in the same conditions described above, however with a content ranging from 0.1 to 15% by mass with respect to the active ceramic component, herein taken as cermet composed of nickel oxide and yttria stabilized zirconia, using in this case commercial product with 70% by weight of nickel oxide. The resulting mass is constituted of (nano) composite illustrated in Figures 1 and 2.

The resulting precursor mixture was hydrated with an acid solution of zirconium IV and yttrium III nitrates, in a proportion adequate to form 8% mol yttria stabilized zirconia (8YSZ) during the suspension burning process addition of solution aiming to obtain 0.001 to 10% by mass of yttria stabilized zirconia with respect to the content of the solid cermet.

The viscosity of the final mass can still be better adjusted with the addition of deionized water, resulting in the formation of a paste with a viscosity adequate to the formation of a film on an electrolyte of 8YSZ.

The film so obtained film can be processed in a porous electrode through an adequate ceramic processing, being demonstrated below the improvement in the performance of this film with respect to the control material((nano) composite hydrated only with deionized water).

Figure 3 shows curves of difference of potential and of power density versus current for the control material - cermet processed only with polyvinyl alcohol and deionized water, with the conditions described above.

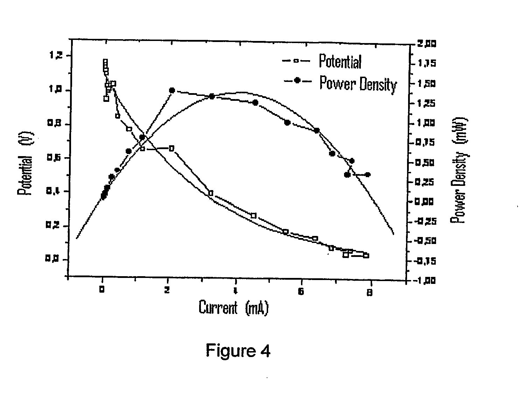

Figure 4 shows curves of difference of potential and of power density versus current for the material processed as indicated in the example above, presenting a five fold increase in power density.

## Claims

1. A process for obtaining aqueous suspensions for electrodes of solid oxide fuel cells and other electrocatalytic devices, the process comprises the steps of:
1.1. dry milling of hydrophilic organic polymer components in a planetary ball mill in consecutive millings of between 2 and 12 cycles, preferably 6 to 10 cycles, wherein each cycle is defined by
1.1.1. a duration of up to 20 min,
1.1.2. a rotational speed of 100 to 300 rpm,
1.1.3. a ratio of the mass of materials to be processed to the mass of the milling balls in the range from 1:2 to 1:8, preferably 1:3 to 1:6,
1.1.4. an occupation of the milling vessel volume of 40 to 80%,
1.2. mixing the ball milled hydrophilic organic polymer components with inorganic components, the amount of said organic components is 0.01 to 15%, preferentially from 0.01 to 5%, yet more preferentially from 0.01 to 2% by mass of the inorganic fraction,
1.3. dry milling in a planetary ball mill said mixture of organic and inorganic components in consecutive millings of between 2 and 12 cycles, preferably 6 to 10 cycles, wherein each cycle is defined by
1.3.1. a duration of up to 20 min,
1.3.2. a rotational speed of 100 to 300 rpm,
1.4. thereby obtaining core shell type nano-composites composed of hydrophilic organic polymer components and inorganic components,
1.5. forming an aqueous suspension by adding water to the mass of nano composites obtained in step 1.4 in order to obtain a suspension having a high content of solids.

2. A process for obtaining aqueous suspensions for electrodes of solid oxide fuel cells and other electrocatalytic devices, the process comprises the steps of:
2.1. providing finely divided hydrophilic organic polymer components,
2.2. mixing said finely divided organic components with inorganic components, , the amount of said organic components is 0.01 to 15%, preferentially from 0.01 to 5%, yet more preferentially from 0.01 to 2% by mass of the inorganic fraction,
2.3. dry milling said mixture of organic and inorganic components in consecutive millings of between 2 and 12 cycles, preferably 6 to 10 cycles, wherein each cycle is defined by
2.3.1. a duration of up to 20 min,
2.3.2. a rotational speed of 100 to 300 rpm,
2.3.3. a ratio of the mass of materials to be processed to the mass of the milling balls in the range from 1:2 to 1:8, preferably 1:3 to 1:6,
2.3.4. an occupation of the milling vessel volume of 40 to 80%,
2.4. thereby obtaining core shell type nano-composites composed of hydrophilic organic polymer components and inorganic components,
2.5. forming an aqueous suspension by adding water to the mass of nano composites obtained in step 2.4 in order to obtain a suspension having a high content of solids.

3. A process for obtaining aqueous suspensions for electrodes of solid oxide fuel cells and other electrocatalytic devices, the process comprises the steps of:
3.1. providing an inorganic phase which has a particle size superior to the desired one in the final suspension,
3.2. mixing finely divided organic components with said inorganic components, the amount of said organic components is 0.01 to 15%, preferentially from 0.01 to 5%, yet more preferentially from 0.01 to 2% by mass of the inorganic fraction,
3.3. dry milling said mixture of organic and inorganic components in a planetary mill in consecutive millings of between 2 and 12 cycles, preferably 6 to 10 cycles, wherein each cycle is defined by
3.3.1. a duration of up to 20 min,
3.3.2. a rotational speed of 100 to 300 rpm,
3.3.3. a ratio of the mass of materials to be processed to the mass of the milling balls in the range from 1:2 to 1:8, preferably 1:3 to 1:6,
3.3.4. an occupation of the milling vessel volume of 40 to 80%,
3.4. thereby obtaining core shell type nano-composites composed of hydrophilic organic polymer components and inorganic components,
3.5. forming an aqueous suspension by adding water to the mass of nano composites obtained in step 3.4 in order to obtain a suspension having a high content of solids.

4. A process according to anyone of claims 1, 2 or 3, wherein the organic components are selected from the group consisting of polyethyleneglycol, polyvinyl alcohol and saccharose.

5. A process according to anyone of claims 1, 2 or 3, wherein the inorganic components are selected from the group consisting of yttria stabilized zirconia, gadolinium doped ceria, nickel oxide and copper oxide.

6. A process according to anyone of claims 1, 2 or 3, wherein inorganic ions are added in the hydration water.

7. A process according to claim 6 **characterized by** utilization of inorganic ions nitrates, such as zirconium, yttrium, gadolinium, nickel, copper, among others.

8. A process according to anyone of the preceding claims, **characterized by** the obtaining of core-shell type nano-composites of hydrophilic polymers-inorganic oxides.

9. A process according to anyone of the preceding claims, **characterized by** obtaining an adequate suspension for the formation of porous heterogeneous structures of inorganic skeleton coated with oxides.

10. An aqueous suspension for electrodes of solid oxide fuel cells and other electrocatalytic devices wherein the suspension comprises core shell type nano-composites composed of hydrophilic organic polymer components and inorganic components.

11. Use of the suspension described in claim 10 to fabricate solid oxide fuel cells, oxide membrane reactors, and other electrocatalytic devices.

## Patentansprüche

1. Verfahren zum Erhalten wässriger Suspensionen für Elektroden von Festoxidbrennstoffzellen und anderen elektrokatalytischen Vorrichtungen, wobei das Verfahren die folgenden Schritte umfasst:
1.1. Trockenvermahlung hydrophiler organischer Polymerkomponenten in einer Planetenkugelmühle in aufeinanderfolgenden Mahlungen mit zwei bis 12 Zyklen, vorzugsweise 6 bis 10 Zyklen, wobei jeder Zyklus definiert ist durch
1.1.1. eine Dauer von bis zu 20 min
1.1.2. eine Rotationsgeschwindigkeit von 100 bis 300 Umdrehungen/min,
1.1.3. ein Verhältnis der Masse der zu verarbeitenden Materialien zu der Masse der Mahlkugeln im Bereich von 1:2 bis 1:8, vorzugsweise 1:3 bis 1:6,
1.1.4. eine Belegung des Mahlbechervolumens von 40 bis 80%,
1.2. Mischen der kugelgemahlenen hydrophilen organischen Polymerkomponenten mit anorganischen Komponenten, wobei der Anteil der organischen Komponenten bei 0,01 bis 15%, bevorzugt bei 0,01 bis 5%, noch bevorzugter bei 0,01 bis 2% der Masse des anorganischen Anteils liegt;
1.3. Trockenvermahlung in einer Planetenkugelmühle der Mischung aus organischen und anorganischen Komponenten in aufeinanderfolgenden Mahlungen mit 2 bis 12 Zyklen, bevorzugt 6 bis 10 Zyklen, wobei jeder Zyklus definiert ist durch
1.3.1. eine Dauer von bis zu 20 min,
1.3.2. eine Drehgeschwindigkeit von 100 bis 300 Umdrehungen/min,
1.4. dadurch Erhalten von Core-Shell-Nanokompositen, die aus hydrophilen organischen Polymerkomponenten und anorganischen Komponenten zusammengesetzt sind,
1.5. Bilden einer wässrigen Suspension durch Hinzufügen von Wasser zu der in Schritt 1.4 erhaltenen Masse von Nanokompositen, um eine Suspension mit hohem Feststoffgehalt zu erhalten.

2. Verfahren zum Erhalten wässriger Suspensionen für Elektroden von Festoxidbrennstoffzellen und anderen elektrokatalytischen Vorrichtungen, wobei das Verfahren die folgenden Schritte umfasst:
2.1. Bereitstellen von fein zerteilten hydrophilen organischen Polymerkomponenten,
2.2. Mischen der fein zerteilten organischen Komponenten mit anorganischen Komponenten, wobei der Anteil der organischen Komponenten 0,01 bis 15%, bevorzugt 0,01 bis 5%, noch bevorzugter 0,01 bis 2% der Masse des anorganischen Anteils beträgt,
2.3. Trockenvermahlung der Mischung von organischen und anorganischen Komponenten in aufeinanderfolgenden Mahlungen mit zwei bis 12 Zyklen, bevorzugt 6 bis 10 Zyklen, wobei jeder Zyklus definiert ist durch
2.3.1. eine Dauer von bis zu 20 min,
2.3.2. eine Drehgeschwindigkeit von 100 bis 300 Umdrehungen/min,
2.3.3. ein Verhältnis der Masse der zu verarbeitenden Materialien zu der Masse der Mahlkugeln im Bereich von 1:2 bis 1:8, vorzugsweise 1:3 bis 1:6,
2.3.4. eine Belegung des Mahlbechervolumens von 40 bis 80%,
2.4. dadurch erhalten von Core-Shell-Nanokompositen, die aus hydrophilen organischen Polymerkomponenten und anorganischen Komponenten zusammengesetzt sind,
2.5. Bilden einer wässrigen Suspension durch Hinzufügen von Wasser zu der in Schritt 2.4 erhaltenen Masse von Nanokompositen, um eine Suspension mit hohem Feststoffgehalt zu erhalten.

3. Verfahren zum Erhalten wässriger Lösungen für Elektroden von Festoxidbrennstoffzellen und anderen elektrokatalytischen Vorrichtungen, wobei das Verfahren die folgenden Schritte umfasst:
3.1. Bereitstellen einer anorganischen Phase, die eine Partikelgröße aufweist, die größer ist als die gewünschte in der endgültigen Suspension,
3.2. Mischen von fein zerteilten organischen Komponenten mit den anorganischen Komponenten, wobei der Anteil der organischen Komponenten 0,01 bis 15%, bevorzugt 0,01 bis 5%, noch bevorzugter 0,01 bis 2% der Masse des anorganischen Anteils beträgt,
3.3. Trockenvermahlen der Mischung aus organischen und anorganischen Komponenten in einer Planetenmühle in aufeinanderfolgenden Mahlungen mit 2 bis 12 Zyklen, bevorzugt 6 bis 10 Zyklen, wobei jeder Zyklus definiert ist durch
3.3.1. eine Dauer von bis zu 20 min,
3.3.2. eine Drehgeschwindigkeit von 100 bis 300 Umdrehungen/min,
3.3.3. ein Verhältnis der Masse der zu verarbeitenden Materialien zu der Masse der Mahlkugeln im Bereich von 1:2 bis 1:8, vorzugsweise 1:3 bis 1:6,
3.3.4. eine Belegung des Mahlbechervolumens von 40 bis 80%,
3.4. dadurch Erhalten von Core-Shell-Nanokompositen, die aus hydrophilen organischen Polymerkomponenten und anorganischen Komponenten zusammengesetzt sind,
3.5. Bilden einer wässrigen Suspension durch Hinzufügen von Wasser zu der in Schritt 3.4 erhaltenen Masse von Nanokompositen, um eine Suspension mit hohem Feststoffgehalt zu erhalten.

4. Verfahren nach einem der Ansprüche 1, 2 oder 3, wobei die organischen Komponenten aus der Gruppe gewählt sind bestehend aus Polyethylenglykol, Polyvinylalkohol und Saccharose.

5. Verfahren nach einem der Ansprüche 1, 2 oder 3, wobei die anorganischen Komponenten aus der Gruppe gewählt sind bestehend aus mit Yttriumoxid stabilisiertem Zirkoniumoxid, Gadolinium-dotiertem Ceroxid, Nickeloxid und Kupferoxid.

6. Verfahren nach einem der Ansprüche 1, 2 oder 3, wobei anorganische Ionen dem Hydratationswasser zugefügt werden.

7. Verfahren nach Anspruch 6, **gekennzeichnet durch** die Verwendung von Nitraten von anorganischen Ionen, wie etwa Zirkonium, Yttrium, Gadolinium, Nickel, Kupfer und andere.

8. Verfahren nach einem der vorhergehenden Ansprüche, **gekennzeichnet durch** das Erhalten der Core-Shell-Nanokompositen aus hydrophilen Polymeren-anorganischen Oxiden.

9. Verfahren nach einem der vorhergehenden Ansprüche, **gekennzeichnet durch** das Erhalten einer geeigneten Suspension für die Bildung von porösen heterogenen Strukturen eines anorganischen Skeletts beschichtet mit Oxiden.

10. Wässrige Suspension für Elektroden von Festoxidbrennstoffzellen und anderen elektrokatalytischen Vorrichtungen, wobei die Suspension Core-Shell-Nanokomposite umfasst, die aus hydrophilen organischen Polymerkomponenten und anorganischen Komponenten zusammengesetzt sind.

11. Verwendung der Suspension aus Anspruch 10 zur Herstellung von Festoxidbrennstoffzellen, Oxidmembranreaktoren, und anderen elektrokatalytischen Vorrichtungen.

## Revendications

1. Un procédé pour l'obtention de suspensions aqueuses pour des électrodes de piles à combustible à oxyde solide et d'autres dispositifs électrocatalytiques, le procédé comprend les étapes consistant à :
1.1. broyer à sec des composants de polymère organiques hydrophiles dans un broyeur planétaire à billes, par des broyages successifs de 2 à 12 cycles, de préférence de 6 à 10 cycles, chaque cycle étant défini par
1.1.1. une durée allant jusqu'à 20 min,
1.1.2. une vitesse de rotation allant de 100 à 300 tours par minute,
1.1.3. un rapport de la masse de matériaux traiter et de la masse des billes de broyage situé dans l'intervalle allant de 1:2 à 1:8, de préférence de 1:3 à 1:6,
1.1.4. une occupation du volume du récipient de broyage allant de 40 à 80%,
1.2. mélanger les composants de polymère organiques hydrophiles broyés par billes avec des composants inorganiques, la quantité de ces composants organiques étant de 0,01 à 15%, préférentiellement de 0,01 à 5%, encore plus préférentiellement de 0,01 à 2%, en masse de la fraction inorganique,
1.3. broyer à sec dans un broyeur planétaire à billes ledit mélange de composants organiques et inorganiques par des broyages successifs de 2 à 12 cycles, de préférence de 6 à 10 cycles, chaque cycle étant défini par
1.3.1. une durée allant jusqu'à 20 min,
1.3.2. une vitesse de rotation allant de 100 à 300 tours par minute,
1.4. obtenir ainsi des nano-composites de type à noyau-enveloppe constitués de composants de polymères organiques hydrophiles et de composants inorganiques,
1.5. former une suspension aqueuse par addition d'eau à la masse de nano-composites obtenus à l'étape 1.4, afin d'obtenir une suspension ayant une teneur élevée en matières solides.

2. Un procédé pour l'obtention de suspensions aqueuses pour des électrodes de piles à combustible à oxyde solide et d'autres dispositifs électrocatalytiques, le procédé comprend les étapes consistant à :
2.1. utiliser des composants de polymères organiques hydrophiles finement divisés,
2.2. mélanger lesdits composants organiques finement divisés avec des composants inorganiques, la quantité desdits composants organiques étant de 0,01 à 15%, préférentiellement de 0,01 à 5%, encore plus préférentiellement de 0,01 à 2%, en masse de la fraction inorganique,
2.3. broyer à sec ledit mélange de composants organiques et inorganiques par des broyages successifs de 2 à 12 cycles, de préférence de 6 à 10 cycles, chaque cycle étant défini par
2.3.1. une durée allant jusqu'à 20 min,
2.3.2. une vitesse de rotation allant de 100 à 300 tours par minute,
2.3.3. un rapport de la masse de matériaux à traiter et de la masse des billes de broyage situé l'intervalle allant de 1:2 à 1:8, de préférence allant de 1:3 à 1:6,
2.3.4. une occupation du volume du récipient de broyage allant de 40 à 80%,
2.4. obtenir ainsi des nano-composites de type à noyau-enveloppe constitués de composants de polymères organiques hydrophiles et de composants inorganiques,
2.5. former une suspension aqueuse par addition d'eau à la masse de nano-composites obtenus à l'étape 2.4, afin d'obtenir une suspension ayant une teneur élevée en matières solides.

3. Un procédé pour l'obtention de suspensions aqueuses pour des électrodes de piles à combustible à oxyde solide et d'autres dispositifs électrocatalytiques, le procédé comprenant les étapes consistant à :
3.1. utiliser une phase inorganique qui a une taille de particules supérieure à celle souhaitée dans la suspension finale,
3.2. mélanger des composants organiques finement divisés avec lesdits composants inorganiques, la quantité de ces composants organiques étant de 0,01 à 15%, préférentiellement de 0,01 à 5%, encore plus préférentiellement de 0,01 à 2%, en masse de la fraction inorganique,
3.3. broyer à sec ledit mélange de composants organiques et inorganiques dans un broyeur planétaire par des broyages successifs de 2 à 12 cycles, de préférence de 6 à 10 cycles, chaque cycle étant défini par 3.3.1. une durée allant jusqu'à 20 min,
3.3.2. une vitesse de rotation allant de 100 à 300 tours par minutes,
3.3.3. un rapport de la masse de matériaux à traiter et de la masse des billes de broyage situé dans l'intervalle allant de 1:2 à 1:8, de préférence allant de 1:3 à 1:6,
3.3.4. une occupation du volume du récipient de broyage allant de 40 à 80%,
3.4. obtenir ainsi des nano-composites de type à noyau-enveloppe constitués de composants de polymères organiques hydrophiles et de composants inorganiques,
3.5. former une suspension aqueuse par addition d'eau à la masse de nano-composites obtenus à l'étape 3.4, afin d'obtenir une suspension ayant une teneur élevée en matières solides.

4. Un procédé selon l'une quelconque des revendications 1, 2 ou 3, dans lequel les composants organiques sont choisis dans le groupe constitué par le polyéthylèneglycol, l'alcool polyvinylique et le saccharose.

5. Un procédé selon l'une quelconque des revendications 1, 2 ou 3, dans lequel les composants inorganiques sont choisis dans le groupe constitué de l'oxyde d'yttrium de zircone stabilisé, l'oxyde de cérium dopé au gadolinium, l'oxyde de nickel et l'oxyde de cuivre.

6. Un procédé selon l'une quelconque des revendications 1, 2 ou 3, dans lequel des ions inorganiques sont ajoutés à l'eau d'hydratation.

7. Un procédé selon la revendication 6, **caractérisé par** l'utilisation d'ions inorganiques, de nitrates tels que le zirconium, l'yttrium, le gadolinium, le nickel, le cuivre, entre autres.

8. Un procédé selon l'une quelconque des revendications précédentes, **caractérisé par** l'obtention de nano-composites de type à noyau-enveloppe d'oxydes de polymères inorganiques hydrophiles.

9. Un procédé selon l'une quelconque des revendications précédentes, **caractérisé par** l'obtention d'une suspension appropriée pour la formation de structures hétérogènes poreuses d'un squelette inorganique revêtu d'oxydes.

10. Une suspension aqueuse pour des électrodes de piles à combustible à oxyde solide et d'autres dispositifs électrocatalytiques, dans laquelle la suspension comprend des nano-composites de type à noyau-enveloppe composés de composants polymères hydrophiles organiques et de composés inorganiques.

11. Utilisation de la suspension décrite dans la revendication 10 pour fabriquer des piles à combustible à oxyde solide, des réacteurs à membrane d'oxyde, et d'autres dispositifs électrocatalytiques.
